# DEMANDE DE BREVET EUROPEEN

(11) **EP 0 549 428 A1**
(43) Date de publication de la demande: **30.06.1993**
(21) Numéro de dépôt: 92403453.1
(22) Date de dépôt: 17.12.1992
(51) Int. Cl.: H02K 1/27

(54) **Rotor à aimants permanents, et machine magnéto-dynamique, comme un moteur sans collecteur, équipée d'un tel rotor**

(30) Priorité: 20.12.1991 FR 9115924
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor à aimants permanents, elle concerne aussi une machine magnétodynamique comme un moteur à commutation électronique ainsi équipée.

La présente invention concerne un rotor qui comporte une pluralité de tuiles en matériau magnétique (4-7). Les extrémités des tuiles sont maintenues par des anneaux de frettage (8,12). L'espace entre deux tuiles est occupé par une barre d'espacement (9) destinée à réaliser un maintien longitudinal des tuiles.

## Description

La présente invention concerne un rotor à aimants permanents, elle concerne aussi une machine magnétodynamique, comme un moteur sans collecteur, ainsi équipée.

Dans l'art antérieur, on a proposé un certain nombre de dispositifs permettant de fixer des aimants permanents sur un corps rotorique qui tourne autour d'un arbre de rotation, dit arbre de rotor.

La présente invention apporte un perfectionnement à l'état de la technique et en particulier permet un montage facilité ainsi que des dispositions et des géométries de flux magnétiques nouvelles et avantageuses.

En effet, l'invention concerne un rotor à aimants permanents, du type comportant au moins une tuile constituant un aimant permanent en contact avec un corps rotorique, caractérisé en ce que :
la tuile est maintenue sur le corps rotorique par au moins un anneau de frettage ;
et en ce que deux tuiles successives sont maintenues à l'aide d'une barre d'écartement et de blocage.

L'invention concerne aussi une machine magnétodynamique, comme un moteur sans collecteur, équipée d'un tel rotor.

L'invention ne se limite pas au mode de réalisation décrit ci-après, mais trouve application dans différentes formes de machines magnéto-dynamiques, en particulier celles à rotor intérieur ou à rotor extérieur.

La présente invention sera mieux comprise a l'aide de la description et des figures annexées qui sont :
- la figure 1 : une vue en perspective d'un rotor dans un mode de réalisation de l'invention,
- la figure 2 : un détail de réalisation d'une partie du rotor de la figure 1,
- la figure 3 : un mode de réalisation d'un détail du rotor de la figure 1,
- la figure 4 : une vue de face d'un autre mode de réalisation d'un rotor selon l'invention,
- la figure 5 : un détail du rotor de la figure 4,
- la figure 6 : un mode de réalisation d'une machine magnéto-dynamique selon un mode de réalisation de l'invention,
- la figure 7 : une vue partielle de face de la machine de la figure 6,
- la figure 8 : une coupe selon une ligne A-A de la machine de la figure 6,
- la figure 9 : un mode de réalisation d'un composant essentiel de l'invention,
- la figure 10 : un détail d'un mode de réalisation d'une machine magnéto-dynamique selon l'invention,
- la figure 11 : une coupe partielle d'un autre mode de réalisation d'une machine magnéto-dynamique selon l'invention.

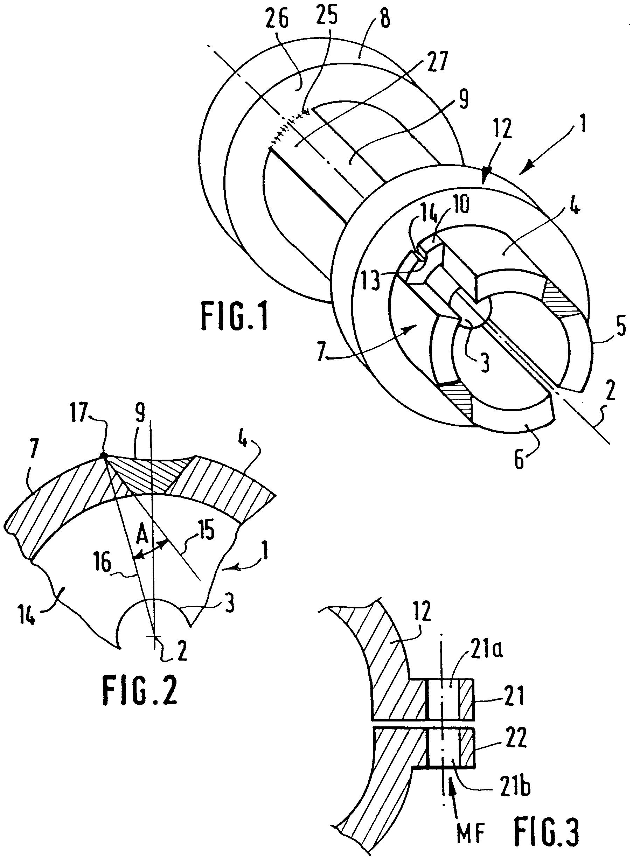

A la figure 1, on a représenté un premier mode de réalisation d'un moteur selon l'invention.

A la figure 1, un rotor 1 comporte un axe de rotation 2 et un arbre de rotation du rotor 3, dont une partie seulement est représentée.

Le rotor 1 comporte aussi un corps rotorique qui n'est pas visible à la figure 1, et sur lequel sont disposées quatre tuiles respectivement 4,5,6 et 7 dont les faces extérieures constituent des pôles alternativement Nord et Sud.

Les tuiles 4-7 sont posées sur le corps rotorique de telle sorte que une première de leur extrémité est logée à l'intérieur d'un premier anneau de frettage 8 qui est disposé à une première extrémité du stator. L'anneau de frettage 8 est muni de traverses longitudinales, comme la traverse 9, qui sont allongées le long de l'axe de rotation 2. Chaque traverse présente un profil tel qu'elle occupe l'espace libre entre deux tuiles, comme les tuiles 4 et 7. Chaque traverse, comme la traverse 9, comporte une extrémité 10 qui est bloquée par un second anneau de frettage 12. Ce second anneau de frettage est installé après la pose des tuiles 4-7, puis des barres d'espacement 9, ..., par dessus la seconde extrémité des tuiles 4-7 et des barres d'espacement.

Dans un mode de réalisation, le bout 10 de chaque traverse comporte une rainure 13 dans laquelle pénètre un ergot 14 pratiqué sur la périphérie inférieure de l'anneau de frettage 12. Cette disposition permet de caler les diverses parties en rotation les unes par rapport aux autres.

A la figure 2, on a représenté une coupe partielle du rotor 1 de la figure 1 près d'un plan médian.

Le rotor 1 comporte l'arbre de rotation 3, le corps rotorique 14 et les tuiles réalisées en matériau magnétique comme des ferrites par exemple 7 et 4 respectivement. Entre deux ferrites 7 et 4, se trouve placée la barre d'espacement comme la barre 9. Cette barre d'espacement présente une forme sensiblement trapézoïdale de façon à ce que la pente 15 du flanc de la barre d'espacement destinée à venir en contact avec le flanc correspondant de la tuile qu'il correspond comme la tuile 7, fasse un angle A positif par rapport au rayon 16 qui joint le sommet 17 de la tuile au centre de rotation 2.

De ce fait, on conçoit que, notamment lorsque le rotor est en rotation, la force centrifuge, qui tend à faire s'écarter la tuile 7 du corps rotorique 14, est contrariée par application de la barre d'espacement 9 grâce à son profil trapézoïdal à angle A par rapport au rayon 16.

Dans le mode de réalisation représenté à la figure 1, la tuile peut être suffisamment maintenue par tout profil convenable de barre d'espacement 9. Grâce à la disposition de la figure 2, le maintien mécanique de chaque tuile est assuré tout le long de la génératrice du rotor.

A la figure 3, on a représenté un mode de réalisation d'une frette comme la frette 12 d'extrémité du rotor de la figure 1.

La frette 12 est constituée par un anneau en matière plastique qui comporte une coupure 20 et deux bords respectivement 21 et 22 destinés à dépasser vers l'extérieur. Dans un mode de réalisation, les bords sont disposés dans le plan perpendiculaire au plan de la figure 3. Dans un tel mode de réalisation, les bords 21 et 22 ne dépassent pas de l'encombrement de la frette. Les bords 21 et 22 sont destinés à recevoir un moyen de liaison qui permet de serrer bord à bord les bords 21 et 22 et à les maintenir fermés en pression autour des barres d'espacement et des tuiles 4-7.

Dans un autre mode de réalisation, les frettes sont réalisées en un matériau plastique qui se contracte à la chaleur. Leur diamètre initial permet le passage facile de tuiles et/ou des barres d'espacement. Puis, le chauffage les rétracte et permet d'exercer une forme de serrage de maintien.

A la figure 1, le premier anneau de frettage 8 est muni d'une liaison 25 entre la face 26 de l'anneau 8 et une première extrémité 27 de la barre d'espacement 9. Dans ce mode de réalisation, les barres d'espacement disposées entre chaque tuile sont liées à l'un des deux anneaux de frettage. Pour rendre le montage plus facile, la liaison 25 est constituée par une articulation dans la matière. Quand l'anneau de frettage 8 est réalisé en matière plastique, la liaison 25 est constituée par un amincissement de la matière entre la barre d'espacement 9 et la face 26 de l'anneau 8.

Dans un procédé de montage d'un rotor selon l'invention, on constitue d'abord le montage du corps rotorique sur l'arbre 3.

Dans une seconde étape, on dispose tout d'abord l'anneau 8 de frettage en le maintenant partiellement par les barres d'espacement comme la barre 9. On installe ensuite une première extrémité de chaque tuile 4-7 dans l'intervalle sous l'anneau de frettage 8 et entre deux barres d'espacement comme la barre 9. Puis on dispose le second anneau de frettage que l'on ferme par exemple avec le moyen représenté à la figure 3. Ainsi on sait réaliser facilement sans travailler les tuiles, un rotor avec des aimants permanents.

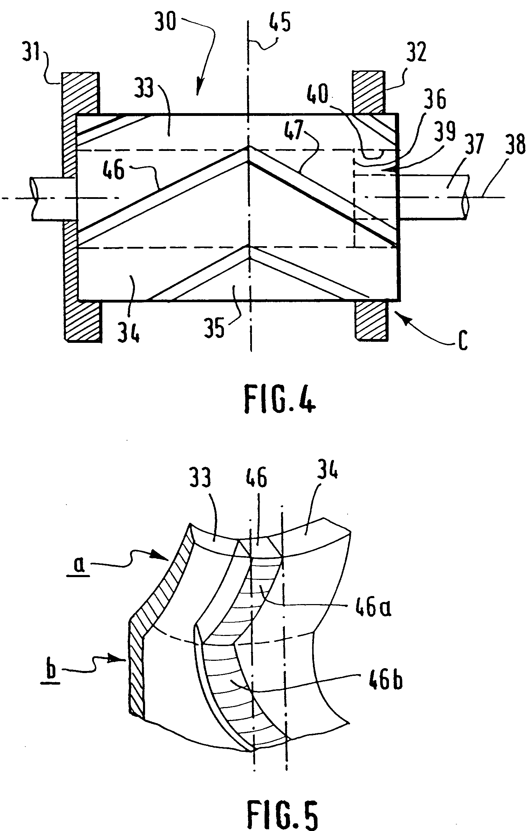

A la figure 4, on a représenté un autre mode de réalisation d'un rotor selon l'invention.

A la figure 4, le rotor 30 comporte un premier anneau de frettage 31 et un second anneau de frettage 32. Les tuiles comme les tuiles 33,34 et 35 sont disposées sur le corps rotorique 36. Le corps rotorique est monté sur l'arbre du rotor 37. L'ensemble tourne autour de l'axe de rotation central 38. On remarque que les ferrites présentent une extrémité du côté marqué C au dessin qui est en porte-à-faux au-dessus d'une zone d'accès vide 39. Dans cette disposition, la zone d'accès 39 est une zone vide comprise entre la face intérieure comme la face 40 de chaque tuile et la périphérie de l'arbre 37. Cette zone libre 39 est destinée à recevoir la partie active de capteurs magnétiques, notamment à effet Hall (non représentés).

Ces capteurs sont montés fixes par rapport au rotor et sont destinés à détecter le passage des ferrites dans une position angulaire prédéterminée de façon à fournir un signal représentatif de la position angulaire instantanée du rotor lors de sa rotation une fois installée dans la machine de l'invention.

On a ainsi un moyen simple de constituer un rotor portant une indication de sa position angulaire et qui ne nécessite pas l'addition de moyens spécifiques comme c'est le cas jusqu'à présent dans l'art antérieur.

Dans un autre mode de réalisation, le bord longitudinal de chaque tuile présente une inclinaison par rapport à la direction de l'axe de rotation. Chaque barre d'espacement présente une inclinaison égale et affecte donc la forme d'une courbe gauche sur la surface cylindrique extérieure du rotor.

Une telle inclinaison présente des effets positifs sur la répartition des lignes de flux magnétique engendré par le rotor.

Quand les inclinaisons des deux bords longitudinaux d'une même tuile sont égales et correspondent à un pas d'encoche statorique, dans le cas d'un stator à encoches occupées par les enroulements statoriques d'une machine magnéto-dynamique, on peut réduire les effets négatifs d'encoche.

Dans un autre mode de réalisation, qui peut se cumuler avec le mode de réalisation précité, les ferrites ou tuiles sont réalisées sous une forme en chevron. Cette forme est visible à la figure 4, et les chevrons présentent chacun un sommet qui coupe le plan médian 45 du rotor.

Dans le mode de réalisation représenté à la figure 4, les chevrons permettent d'équilibrer les poussées axiales entre deux tuiles.

Dans un autre mode de réalisation, afin de limiter les effets d'ondulation de couple réluctant, le rotor de l'invention présente des chevrons assymétriques par rapport au plan médian 45. De ce fait, il est possible même de réaliser ou bien des chevrons ayant des longueurs de pentes opposées respectivement 46 et 47 inégales ou de pentes inégales.

Entre deux tuiles, comme les tuiles 34 et 35, on dispose une barre d'espacement ou traverse ainsi qu'on l'a représenté aux figures 1 ou 2. En particulier, l'une des extrémités de chaque barre d'espacement peut être liée à l'anneau de frettage 31 ou encore être libre.

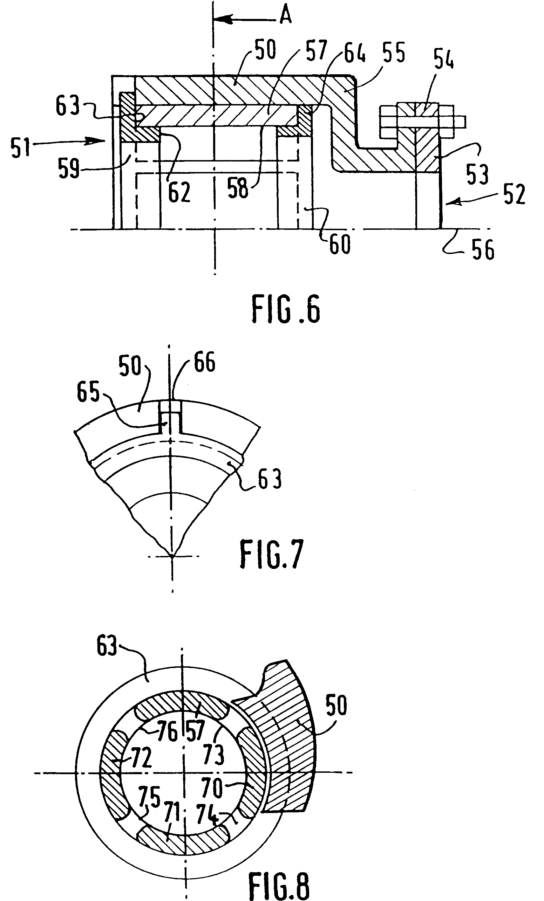

A la figure 5, on a représenté un schéma de barre d'espacement pour tuiles à chevrons. On a représenté partiellement la tuile 33 et la tuile 34 entre lesquelles se trouve la barre d'espacement 46. Elle présente deux parties 46a et 46b de part et d'autre du plan dans lequel se trouvent les sommets des chevrons. Les bords des tuiles et des barres d'espacement présentent des formes gauches.

Les tuiles et/ou les barres d'espacement en ducron peuvent être réalisées, de façon à simplifier leur fabrication et leur montage en deux parties des côtés a et b. Un anneau de maintien peut être prévu au niveau de la séparation, aux sommets des chevrons, mais n'est pas absolument nécessaires. En particulier, les extrémités des demies barres d'espacement peuvent comporter des montages à embrèvement pour assurer la rigidité de l'ensemble.

A la figure 6, on a représenté un mode de réalisation d'une machine magnéto-dynamique à rotor extérieur ou encore à rotor cloche.

A la figure 6, le stator n'a pas été représenté mais il est destiné à pénétrer à l'intérieur du rotor 50 par l'ouverture 51. L'autre extrémité 52 du rotor reçoit un moyen de fixation 53 doté d'oreilles 54 de liaison à l'arbre rotorique (non représenté). Le corps rotorique proprement dit présente une forme de cloche 55.

La face intérieure alignée sur l'axe de rotation 56 de la machine, est munie de tuiles réalisées en un matériau magnétique à aimantation permanente comme une ferrite. Une tuile 57 a été représentée en coupe. Dans le mode de réalisation de la figure 6, le frettage est réalisé sur la face intérieure 58 de la tuile 57. On a ainsi disposé un premier anneau de frettage 59 du côté 51 et un second anneau de frettage 60 du côté 52 du rotor. Ces anneaux comportent une partie cylindrique respectivement 61 et 62 à l'intérieur du rotor et une seconde partie respectivement 63 et 64 en forme de disque percé au centre de façon à laisser le passage au stator lors de son installation dans le rotor.

Dans un tel mode de réalisation, les anneaux de frettage 59 et 60 permettent de maintenir les tuiles sur le corps rotorique sans intervention ni formage de la tuile.

A la figure 7, on a représenté une vue de face partielle du rotor de la figure 6. La partie 63 en forme de disque de l'anneau de frettage 59 est munie d'un ergot 65 destiné à pénétrer dans une rainure ou encoche 66 pratiquée dans le corps rotorique 50. Un tel ergot permet d'empêcher un glissement en rotation du montage des tuiles.

A la figure 8, on a représenté une coupe selon la ligne A-A du rotor de la figure 1.

A la figure 8, on a représenté partiellement le corps rotorique 50, à l'intérieur duquel est placé le montage des aimants avec leur frettage ainsi des traverses permettant de séparer les tuiles respectivement 57,70,71 et 72 par des barres d'espacement respectivement 73,74,75 et 76. Ces barres d'espacement peuvent être montées fixes aux deux extrémités sur les anneaux respectivement 59 et 60 (non représentés à la figure 8). Dans cette disposition, l'ensemble peut être monté et introduit dans le corps rotorique 50 lors du montage du moteur.

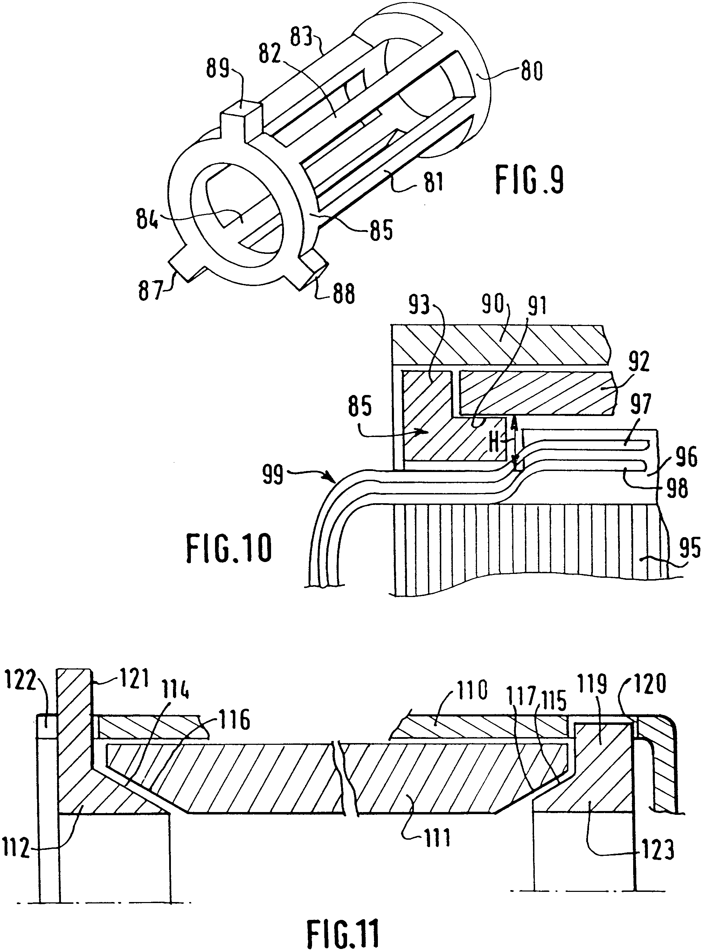

A la figure 9, on a représenté un mode de réalisation d'un moyen de maintien des tuiles selon l'invention. A la figure 9, on a représenté le moyen de montage en un seul bloc réalisé par moulage dans un matériau plastique et qui comporte un premier anneau de frettage 80 qui sera destiné à venir le plus au fond du rotor, et qui est relié par des barres respectivement 81,82,83 et 84 à un second anneau de frettage 85 destiné à se trouver du côté 51 d'ouverture du rotor cloche. L'anneau de frettage 85 comporte une zone d'appui pour la face intérieure de chaque tuile ainsi que des ergots respectivement 87,88 et 89 destinés à venir se loger dans des rainures correspondantes, comme la rainure 66 de la figure 7 du côté 51 de l'entrée du rotor cloche.

A la figure 10, on a représenté un mode de réalisation d'une machine magnéto-dynamique dotée d'un rotor cloche selon l'invention.

A la figure 10, qui est une coupe partielle de la partie avant de la machine, le rotor comporte un corps rotorique 90, dans lequel est monté un montage comme celui de la figure 9, dans lequel l'anneau de frettage 85 est visible qui comporte une face d'appui 91 qui vient sur la face inférieure d'une tuile respectivement 92 et dont une partie en forme de disque 93 permet de venir en butée contre la face correspondante 94 de la tuile 91. A l'intérieur du rotor on installe un stator 95 à encoches 96 à l'intérieur desquelles sont disposés des fils 97 et 98 par exemple de bobinage du stator. Ces fils ressortent de l'extérieur du stator en un chignon 99.

On constate que l'anneau de frettage 85 présente à l'intérieur de l'alésage rotorique, une hauteur dans laquelle il est difficile d'installer un stator. Dans un mode de réalisation, l'épaisseur H est au plus égale à l'entrefer prévu entre le rotor et le stator.

Dans un autre mode de réalisation, cette épaisseur est annulée par une coupe biaise de la face en regard de la ferrite et/ou de l'anneau de frettage. Ce mode de réalisation est représenté partiellement à la figure 11.

A la figure 11, un corps rotorique 110 comporte au moins une tuile en aimant permanent 111 dont les deux extrémités viennent en butée sur des anneaux de frettage respectivement 112 et 113 dont une face 114 et 115 est en coupe biaise correspondant à une coupe en rapport de même pente respectivement 116 et 117 de la ferrite 111. De ce fait, l'entrefer peut être réduit au strict nécessaire.

L'anneau de frettage 113 est prolongé dans le sens vertical par au moins un ergot 119 qui pénètre à travers un logement 120 de façon à maintenir en rotation l'anneau de frettage 113. Cet ergot peut pénétrer du logement 120 par exemple par déformation élastique comme un clips.

Dans la partie avant du rotor, de même, l'anneau 112 présente un ergot 121 qui vient dans un logement comme le logement 122 du corps rotorique 110. Ce logement est ouvert sur l'extérieur pour permettre l'introduction du rotor des parties actives magnétiques du rotor.

Les moyens de maintien de l'invention, anneau, frettes, espaceurs, bras, etc sont réalisés en matériaux amagnétiques. En particulier, on peut les réaliser en matériaux plastiques, ou composites résistant à la température de fonctionnement de la machine magnéto-dynamique équipée du rotor.

## Revendications

**1)** Rotor à aimants permanents du type comportant un arbre de rotation (3) et un corps rotorique (4), caractérisé en ce qu'il comporte une pluralité de tuiles (4-7) posées sur une face d'appui du corps rotorique (14) et dont les extrémités libres sont liées par des anneaux de frettage (8,12), et en ce que l'espace entre deux tuiles est occupé par une barre d'espacement (9).

**2)** Rotor selon la revendication 1, caractérisé en ce que la barre d'espacement (9) présente une forme trapézoïdale destinée à augmenter le maintien de chaque tuile en contact contre la force centrifuge notamment.

**3)** Rotor selon la revendication 1 ou 2, caractérisé en ce qu'au moins un anneau de frettage (12) comporte une coupure (20) et des bords (21,22) dotés d'un moyen de liaison qui permet de les maintenir fermés en pression autour des barres d'espacement et des tuiles (4-7).

**4)** Rotor selon l'une des revendications précédentes, caractérisé en ce que l'une des extrémités de chaque barre d'espacement est liée (25) à au moins un anneau de frettage (8).

**5)** Rotor selon la revendication 4, caractérisé en ce que la liaison entre la barre d'espacement et l'anneau de frettage (8) est constituée par une articulation (25).

**6)** Rotor selon la revendication 4, caractérisé en ce que la liaison entre la barre d'espacement et l'anneau de frettage (8) est constituée par un amincissement de la matière entre la barre d'espacement (9) et la face (26) de l'anneau (8).

**7)** Rotor selon l'une des revendications précédentes, caractérisé en ce que l'une des extrémités des tuiles en matériau magnétique (33,34,35) est en porte-à-faux par rapport au corps rotorique (36) qui permet de dégager une zone vide (39) destinée à recevoir la partie active d'au moins d'un capteur magnétique comme un capteur à effet Hall, destiné à fournir un signal représentatif de la position angulaire instantanée du rotor.

**8)** Rotor selon l'une des revendications précédentes, caractérisé en ce que les tuiles sont réalisées en forme de chevrons présentant une première pente (46) et une seconde pente (47) de part et d'autre du plan médian (45) du rotor.

**9)** Rotor selon la revendication 8, caractérisé en ce que les tuiles et/ou les barres d'espacement sont réalisées en deux parties des côtés (a,b) avec éventuellement un anneau de maintien disposé au niveau de la séparation, aux sommets des chevrons.

**10)** Rotor selon la revendication 8 ou 9, caractérisé en ce que les pentes (46,47) ne sont pas symétriques par rapport au plan médian (45).

**11)** Rotor selon la revendication 8 ou 9, caractérisé en ce que les chevrons présentent des longueurs différentes de part et d'autre du plan médian (45).

**12)** Rotor selon l'une quelconque des revendications 7 à 11, caractérisé en ce que l'espace entre deux tuiles est occupé par au moins une barre d'espacement en forme de chevron.

**13)** Rotor selon l'une des revendications précédentes, caractérisé en ce que l'anneau de frettage comporte une face (114,115) en coupe biaise destinée à venir s'adapter sur la face correspondante (58,116) de la tuile (111).

**14)** Rotor selon la revendication 13, caractérisé en ce que les tuiles sont disposées sur la surface intérieure d'un rotor creux (50).

**15)** Rotor selon l'une des revendications précédentes, caractérisé en ce que chaque anneau de frettage comporte au moins un ergot (63,65,87-89,119,121) destiné à venir dans une rainure ou encoche pour immobiliser le rotor ou la partie magnétique active du rotor.

**16)** Rotor selon l'une des revendications 1 à 7, caractérisé en ce que chaque tuile comporte deux bords longitudinaux qui présentent des inclinaisons par rapport à la direction de l'axe de rotation du rotor.

**17)** Machine magnéto-dynamique comme un moteur à commutation électronique, caractérisée en ce qu'elle comporte un rotor selon l'une quelconque des revendications précédentes.
